# EUROPEAN PATENT SPECIFICATION

(11) **EP 4 489 417 B1**
(45) Date of publication and mention of the grant of the patent: **18.11.2026**
(21) Application number: 23199737.0
(22) Date of filing: 26.09.2023
(51) Int. Cl.: H04N 23/51, H04N 23/52, G03B 17/55, G03B 17/56, B60R 1/20, H04N 23/57, B60R 11/04

(54) **VEHICLE CAMERA**
FAHRZEUGKAMERA
CAMÉRA DE VÉHICULE

(30) Priority: 03.07.2023 US 202318217659
(43) Date of publication of application: 08.01.2025
(73) Proprietor: Getac Technology Corporation, New Taipei City 221009 (TW)
(72) Inventor: JU, Shuan-Yeong, Taipei City (TW); LIN, Ruei-Rong, Taipei City (TW); HSIAO, Wei-Chung, Taipei City (TW)
(74) Representative: Müller Schupfner & Partner Patent- und Rechtsanwaltspartnerschaft mbB (Muc)

(56) References cited:
- CN-A- 114 745 482
- DE-A1- 19 637 279
- US-A1- 2014 104 479
- US-A1- 2016 174 408
- US-A1- 2016 301 819

## Description

### Technical Field

The disclosure relates to a vehicle camera, more particularly to a vehicle camera having thermal insulation components.

### Background

In general, a dashcam is provided in a vehicle (e.g., a car) to record views in front of the vehicle. When a driver drives the vehicle, the driver may use one hand to rotate the dashcam to adjust the camera angle thereof.

However, a casing of the dashcam is made of metal material for facilitating heat dissipation, but it may cause the casing of the dashcam to have high temperature during operation. Thus, when the drive uses one hand to touch and rotate the dashcam, the driver may feel uncomfortable. Accordingly, how to solve the aforementioned issue is one of the topics in this field.

US 2016/0174408 A1 relates to a camera having a substantially cubic form factor comprising, among other components, an image sensor, a lens assembly, a printed circuit board, and a heat sink.

CN114745482A relates to a camera comprising a shell, a lens ring, a cover body and a heat source. The heat source is arranged in the shell, and the lens ring is arranged on the outer surface of the shell. The lens penetrates through the shell from the inside of the shell, and the lens ring is arranged around the lens. The cover body covers the outer surface of the shell body.

### SUMMARY

The disclosure provides a vehicle camera which is capable of preventing the driver from feeling uncomfortable when rotating the vehicle camera. The disclosure provides a vehicle camera according to claim 1. Preferred embodiments are provided in the dependent claims.

One embodiment of the disclosure provides a vehicle camera. The vehicle camera includes a camera main body and two thermal insulation components. The camera main body has two side surfaces facing away from each other. The two thermal insulation components are respectively disposed on the side surfaces of the camera main body facing away from each other. Thermal conductivities of the two thermal insulation components are smaller than a thermal conductivity of the camera main body.

According to vehicle camera as discussed in the above embodiment, the thermal insulation components are respectively disposed on the side surfaces of the camera main body facing away from each other, and the thermal conductivities of the thermal insulation components are smaller than the thermal conductivity of the camera main body, such that heat generated by the camera main body is difficult to be conducted to the thermal insulation components, and thus the thermal insulation components have relative lower temperatures. Therefore, when a driver uses one hand to grip the thermal insulation components for rotating the vehicle camera, the relative lower temperatures of the thermal insulation components may not make the driver to feel uncomfortable.

### BRIEF DESCRIPTION OF THE DRAWINGS

The present disclosure will become better understood from the detailed description given herein below and the accompanying drawings which are given by way of illustration only and thus are not intending to limit the present disclosure and wherein:
FIG. 1 is a perspective view of a vehicle camera according to one embodiment of the disclosure;
FIG. 2 is an exploded view of the vehicle camera in FIG. 1;
FIG. 3 is a cross-sectional view of the vehicle camera in FIG. 1;
FIG. 4 is another cross-sectional view of the vehicle camera in FIG. 1;
FIG. 5 is an exploded view of a vehicle camera according to another unclaimed example of the disclosure;
FIG. 6 is a cross-sectional view of the vehicle camera in FIG. 5; and
FIG. 7 is another cross-sectional view of the vehicle camera in FIG. 5.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

In addition, the terms used in the present disclosure, such as technical and scientific terms, have its own meanings and can be comprehended by those skilled in the art, unless the terms are additionally defined in the present disclosure. That is, the terms used in the following paragraphs should be read on the meaning commonly used in the related fields and will not be overly explained, unless the terms have a specific meaning in the present disclosure.

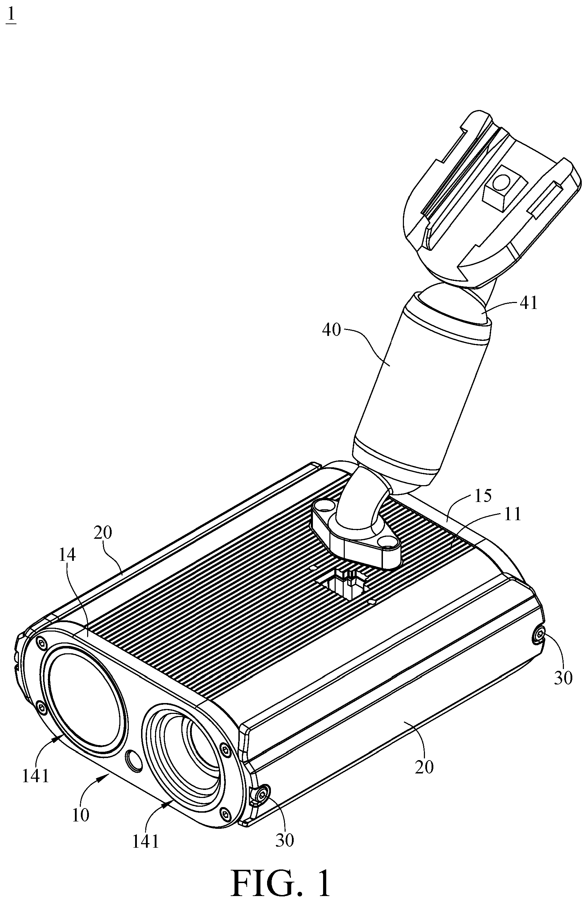

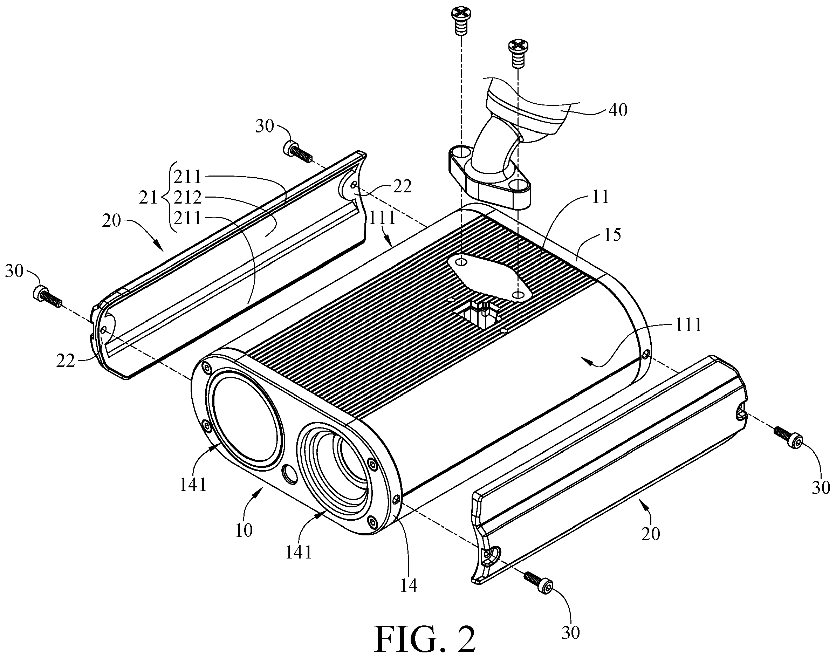

Referring to FIGS. 1 and 2, FIG. 1 is a perspective view of a vehicle camera 1 according to one embodiment of the disclosure, and FIG. 2 is an exploded view of the vehicle camera 1 in FIG. 1.

In this embodiment, the vehicle camera 1 includes a camera main body 10 and two thermal insulation components 20. In addition, the vehicle camera 1 further includes a plurality of fasteners 30 and may include a support 40.

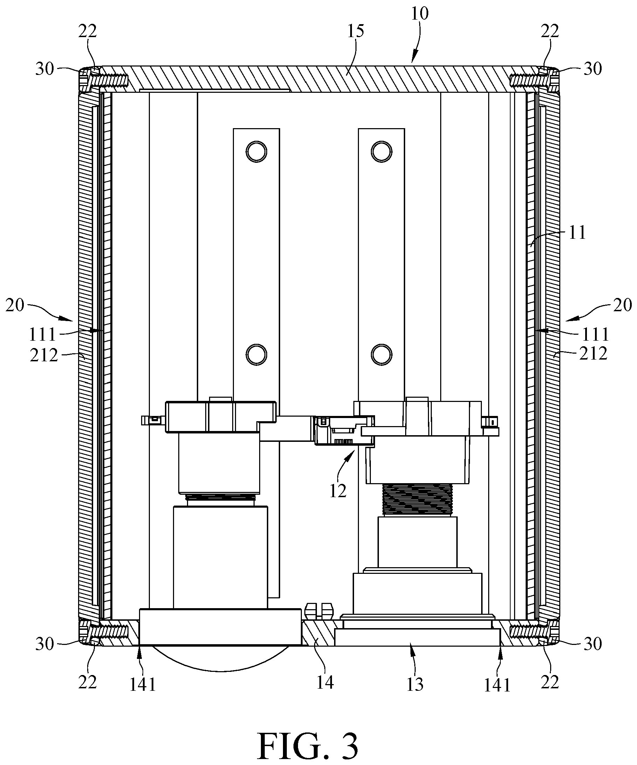

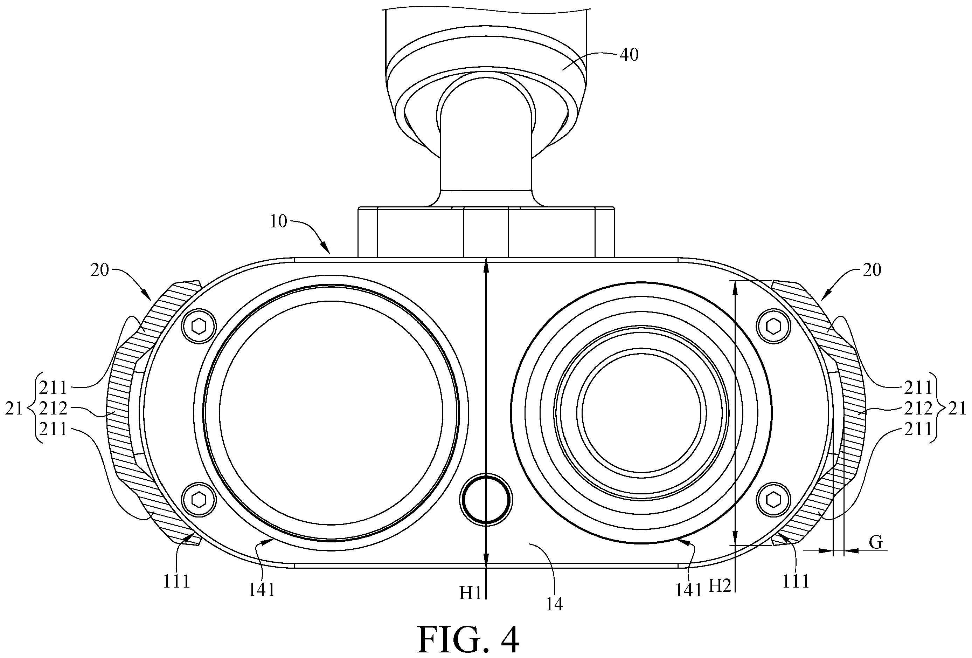

Then, referring to FIGS. 2 to 4, FIG. 3 is a cross-sectional view of the vehicle camera 1 in FIG. 1, and FIG. 4 is another cross-sectional view of the vehicle camera 1 in FIG. 1.

The camera main body 10 may include a casing 11, an electronic assembly 12, a lens assembly 13, a front cap 14, and a rear cap 15. The casing 11 is, for example, made of a metal material, such as aluminum, and a thermal conductivity of the casing 11 is approximately 204 W/m-°C. The casing 11 has a fixed cross-sectional profile by pushing material through a die of the desired cross-section. In other words, the casing 11 is made by extrusion. The cross-section of the casing 11 is shaped like a fully rounded rectangle. The cross-section of the casing 11 has adjacent dimples along the length or straight part of the fully rounded rectangle. The electronic assembly 12 and the lens assembly 13 are accommodated in the casing 11. During the operation of the camera main body 10, the electronic assembly 12 may generate heat, and the heat may be conducted to the casing 11. The front cap 14 and the rear cap 15 are made of metal. A front view of the front cap 14 is shaped like a fully rounded rectangle. The lens assembly 13 is exposed through two circular openings 141 of the front cap 14. The length of the fully rounded rectangle is longer than the combination of the diameters of the two circular openings 141. A rear view of the rear cap 15 shares the same shape as the front view of the front cap 14. Both the front cap 14 and the rear cap 15 are fixed to the cross-section of the casing through four screws.

In this embodiment, the casing 11 has two side surfaces 111 facing away from each other, and the side surfaces 111 are, for example, curved surfaces. A curved part of the fully rounded rectangle extends along an extrusion direction of the casing 11 to form the curved surfaces or the side surfaces 111. The two thermal insulation components 20 are, for example, curved plates. The thermal insulation components 20 are, for example, made of plastic material, such as polycarbonate, and thermal conductivities of the thermal insulation components 20 are smaller than or equal to 10W/m-°C. The two thermal insulation components 20 are respectively fixed on the front cap 14 and the rear cap 15 via the fasteners 30. The thickness of the front cap 14 and the thickness of the rear cap 15 are thicker than the diameter of a fastener or a screw head thereof. As disclosed below, the two thermal insulation components 20 are partially molded to or in contact with the two side surfaces 111 of the casing 11. In this embodiment, the thermal insulation components 20 are the same in structure, and the thermal insulation components 20 are respectively fixed on the front cap 14 and the rear cap 15 via the same means, and thus the following paragraphs merely introduce one thermal insulation component 20 and how this thermal insulation component 20 is fixed to the front cap 14 and the rear cap 15.

The thermal insulation component 20 includes a middle portion 21 and two mount portions 22 respectively connected to two opposite sides of the middle portion 21. The middle portion 21 includes two contact parts 211 and a connection part 212 located between and connected to the two contact parts 211. The contact parts 211 of the middle portion 21 and the mount portions 22 are in contact with the side surface 111 of the casing 11, and the connection part 212 of the middle portion 21 is spaced apart from the side surface 111 of the casing 11 by a distance G, where the distance G falls within a range from 1.08mm to 1.32mm. In this embodiment, the height H2 of the thermal insulation component 20 is smaller than the height H1 of the camera main body 10, and the height H2 may be 90% of the height H1, but in some other embodiments, the height of the thermal insulation component may be 110% of the height of the camera main body; that is, the height of the thermal insulation component may fall within a range from 90% to 110% of the height of the camera main body, but the disclosure is not limited thereto, the relative height relationship between the thermal insulation component and the camera main body may be modified as actual requirements.

The fasteners 30 are, for example, screws. The fasteners 30 are respectively disposed through the two mount portions 22 of the thermal insulation component 20 and screwed into the front cap 14 and the rear cap 15 of the camera main body 10.

Note that the thermal insulation component 20 is not restricted to being fixed on rear cap 15 via the fasteners 30; in some other unclaimed examples, the thermal insulation component may be fixed on the side surface of the casing via, for example, an adhesive or a snap-fit manner.

One end of the support 40 is assembled with the camera main body 10, and another end of the support 40 may be fixed to a roof or windshield of a vehicle (not shown). The support 40 may have a universal joint structure 41 (shown in FIG. 1) to enable the camera main body 10 to be rotated for adjusting the camera angle of the camera main body 10.

In this embodiment, the thermal insulation components 20 are respectively disposed on the side surfaces 111 of the camera main body 10 facing away from each other, and the thermal conductivities of the thermal insulation components 20 are smaller than the thermal conductivity of the camera main body 10, such that heat generated by the camera main body 10 is difficult to be conducted to the thermal insulation components 20, and thus the thermal insulation components 20 have relative lower temperatures. In other words, it is hard for the camera main body 10 to pass its heat through the thermal insulation components 20 and conduct its heat to a driver or user. Therefore, when a driver uses one hand to grip the thermal insulation components 20 for rotating the camera main body 10, the relative lower temperatures of the thermal insulation components 20 may not make the driver to feel uncomfortable.

Specifically, during the operation of the vehicle camera 1, the surface temperature of the camera main body 10 may be approximately above 60 °C. However, a regulation restricts a surface of an object for being touched in a short period (e.g., > 1s and < 10s) to be 60 °C in maximum. In this embodiment, there are two thermal insulation components 20 provided at the side surfaces 111 of the camera main body 10 facing away from each other, and the temperatures of the thermal insulation components 20 are measured to be approximately 49.5 °C. As a result, even though the surface temperature of the camera main body 10 is high, the driver is to grip the thermal insulation components 20 of relative lower temperature instead of the camera main body 10, and thus the driver can comfortably rotate the camera main body 10 for adjusting the camera angle thereof.

In this embodiment, the vehicle camera 1 is applied in the vehicle, and there is a resistance provided at the universal joint structure 41 of the support 40 in order to prevent the camera main body 10 from being rotated due to vibrations caused by an uneven road condition. Also, two opposite sides of the camera main body 10 where the thermal insulation components 20 are disposed are the places where the hand of the driver can easily apply forces to rotate the camera main body 10. Therefore, when the driver desires to rotate the camera main body 10, the thermal insulation components 20 disposed at the two opposite sides of the camera main body 10 ensure the driver to comfortably rotate the camera main body 10 for adjusting the camera angle thereof.

Note that the aforementioned materials of the casing 11, the front cap 14, the rear cap 15, and the thermal insulation components 20 are merely exemplary and may be modified according to actual requirements.

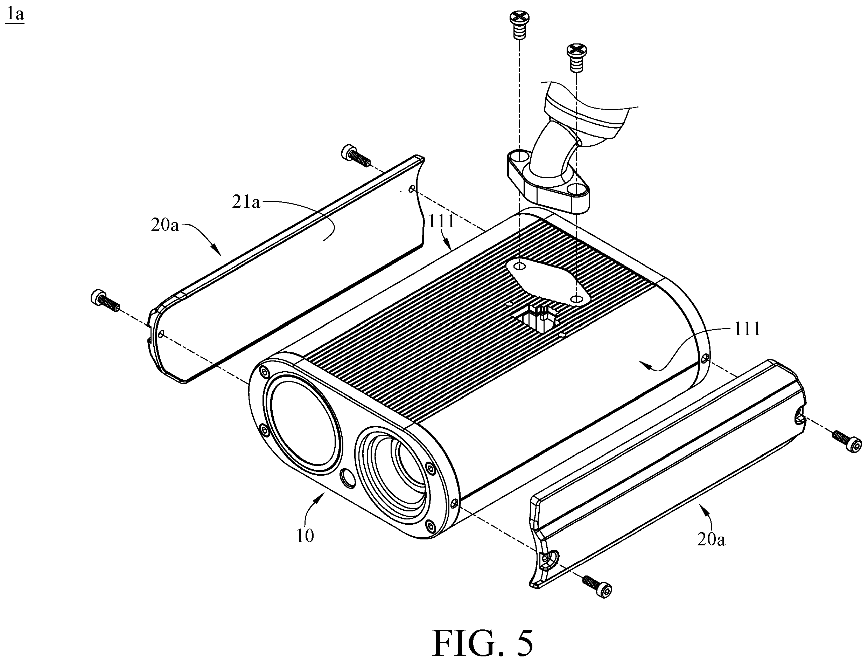

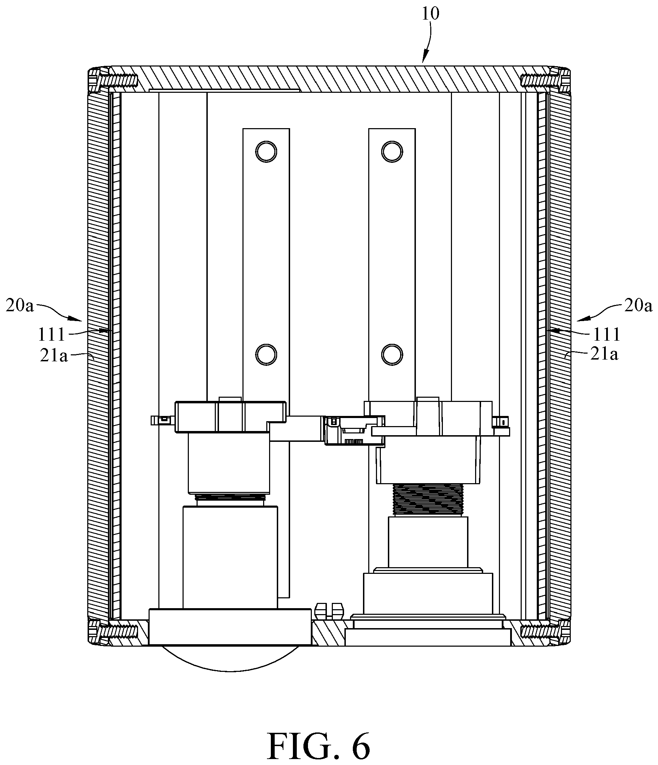

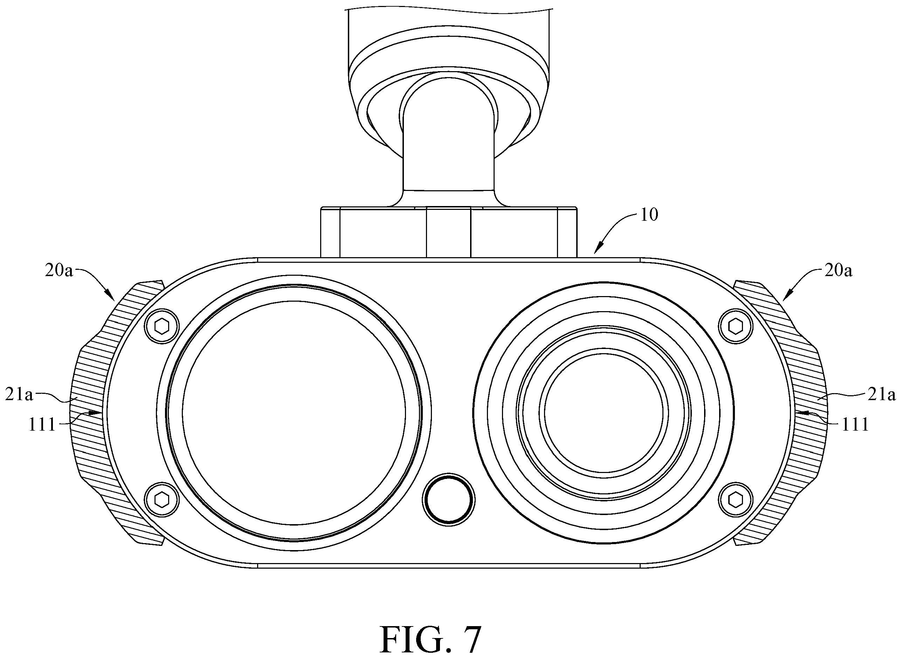

Then, referring to FIGS. 5 to 7, FIG. 5 is an exploded view of a vehicle camera 1a according to another embodiment of the disclosure, FIG. 6 is a cross-sectional view of the vehicle camera 1a in FIG. 5, and FIG. 7 is another cross-sectional view of the vehicle camera 1a in FIG. 5.

The vehicle camera 1a of this embodiment is similar to the vehicle camera 1 of the previous embodiment, and the difference between them is mainly the structures of the thermal insulation components, and thus the following paragraphs will merely introduce the structures of the thermal insulation components of the vehicle camera 1a, and the same parts between them will not be repeatedly introduced hereinafter.

In this unclaimed example, in each of two thermal insulation components 20a, a middle portion 21a has no part spaced apart from the side surface 111 of the camera main body 10; that is, the middle portion 21a is entirely in contact with the side surface 111 of the camera main body 10. In this configuration, the thermal insulation components 20a also can have relative lower temperatures for the driver to be comfortably to grip thereon and rotate camera main body 10.

Note that the aforementioned side surfaces 111 of the camera main body 10 and the thermal insulation components 20 and 20a are not restricted to being in a curved shape; in some other embodiments, the aforementioned side surfaces of the camera main body and the thermal insulation components may be in a flat shape.

According to vehicle cameras as discussed in the above embodiments, the thermal insulation components are respectively disposed on the side surfaces of the camera main body facing away from each other, and the thermal conductivities of the thermal insulation components are smaller than the thermal conductivity of the camera main body, such that heat generated by the camera main body is difficult to be conducted to the thermal insulation components, and thus the thermal insulation components have relative lower temperatures. Therefore, when a driver uses one hand to grip the thermal insulation components for rotating the vehicle camera, the relative lower temperatures of the thermal insulation components may not make the driver to feel uncomfortable.

In addition, the vehicle camera is applied in the vehicle, and there is a resistance provided at the universal joint structure of the support in order to prevent the camera main body from being rotated due to vibrations caused by an uneven road condition. Also, two opposite sides of the camera main body where the thermal insulation components are disposed are the places where the hand of the driver can easily apply forces to rotate the camera main body. Therefore, when the driver desires to rotate the camera main body, the thermal insulation components disposed at the two opposite sides of the camera main body ensure the driver to comfortably rotate the camera main body for adjusting the camera angle thereof.

It will be apparent to those skilled in the art that various modifications and variations can be made to the present disclosure. It is intended that the specification and examples be considered as exemplary embodiments only, with a scope of the disclosure being limited by the following claims.

## Claims

1. A vehicle camera (1), comprising:
a camera main body (10), having two side surfaces (111) facing away from each other; and
two thermal insulation components (20), respectively disposed on the two side surfaces (111) of the camera main body (10) facing away from each other;
wherein thermal conductivities of the two thermal insulation components (20) are smaller than a thermal conductivity of the camera main body (10);
**characterized in that**
the vehicle camera (1) further comprises a plurality of fasteners (30), and
the two thermal insulation components (20) are respectively fixed on the two side surfaces (111) of the camera main body (10) via the plurality of fasteners (30);
wherein each of the two thermal insulation components (20) comprises a middle portion (21) and two mount portions (22) respectively connected to two opposite sides of the middle portion, and
the four mount portions (22) of the two thermal insulation components (20) are fixed on the two side surfaces (111) of the camera main body (10) via the plurality of fasteners (30), and the two middle portions (21) of the two thermal insulation components (20) are respectively in contact with the two side surfaces (111) of the camera main body (10);
wherein the middle portion (21) of each of the two thermal insulation components (20) comprises two contact parts (211) and a connection part (212) located between and connected to the two contact parts (211), and
the four contact parts (211) of the two middle portions (21) of the two thermal insulation components (20) are in contact with the two side surfaces (111) of the camera main body (10), and the two connection parts (212) of the two middle portions (21) of the two thermal insulation components (20) are respectively spaced apart from the two side surfaces (111) of the camera main body (10) by a distance (G).

2. The vehicle camera (1) according to claim 1, wherein heights (H2) of the two thermal insulation components (20) fall within a range from 90% to 110% of a height (H1) of the camera main body (10).

3. The vehicle camera (1) according to claim 1, wherein a casing (11) of the camera main body (10) is made of metal material, and the two thermal insulation components (20) are made of plastic material.

4. The vehicle camera (1) according to claim 1, wherein the two thermal insulation components (20) are plates.

5. The vehicle camera (1) according to claim 1, further comprising a support (40), wherein the support (40) is disposed on the camera main body (10).

6. The vehicle camera (1) according to claim 1, wherein the camera main body comprises a casing (11), a front cap (14), a rear cap (15), an electronic assembly (12) and a lens assembly (13), the two side surfaces (111) are located at the casing (11), the front cap (14) and the rear cap (15) are fixed to two opposite sides of the casing (11), the two thermal insulation components (20) are fixed on the front cap (14) and the rear cap (15), the electronic assembly (12) and the lens assembly (13) are located in the casing, the front cap (14) has an opening (141), and the lens assembly (13) is exposed through the opening (141).

## Patentansprüche

1. Fahrzeugkamera (1), umfassend:
einen Kamerahauptkörper (10) mit zwei voneinander abgewandten Seitenflächen (111); und
zwei Bauteile der Wärmeisolierung (20), die jeweils an den zwei voneinander abgewandten Seitenflächen (111) des Kamerahauptkörpers (10) angeordnet sind;
wobei Wärmeleitfähigkeiten der zwei Bauteile der Wärmeisolierung (20) geringer sind als eine Wärmeleitfähigkeit des Kamerahauptkörpers (10);
**dadurch gekennzeichnet, dass** die Fahrzeugkamera (1) ferner eine Vielzahl von Befestigungselementen (30) umfasst und die zwei Bauteile der Wärmeisolierung (20) jeweils über die Vielzahl von Befestigungselementen (30) an den zwei Seitenflächen (111) des Kamerahauptkörpers (10) befestigt sind;
wobei jede der zwei Bauteile der Wärmeisolierung (20) einen Mittelabschnitt (21) und zwei Halteabschnitte (22) umfasst, die jeweils mit zwei gegenüberliegenden Seiten des Mittelabschnitts verbunden sind, und die vier Halteabschnitte (22) der zwei Bauteile der Wärmeisolierung (20) über die Vielzahl der Befestigungselemente (30) an den zwei Seitenflächen (111) des Kamerahauptkörpers (10) befestigt sind, und die zwei Mittelabschnitte (21) der zwei Bauteile der Wärmeisolierung (20) jeweils mit den zwei Seitenflächen (111) des Kamerahauptkörpers (10) in Kontakt stehen;
wobei der Mittelabschnitt (21) jedes der zwei Bauteile der Wärmeisolierung (20) zwei Kontaktabschnitte (211) und einen Verbindungsabschnitt (212) umfasst, der sich zwischen den zwei Kontaktabschnitten (211) befindet und mit diesen verbunden ist, und die vier Kontaktabschnitte (211) der zwei Mittelabschnitte (21) der zwei Bauteile der Wärmeisolierung (20) mit den zwei Seitenflächen (111) des Kamerahauptkörpers (10) in Kontakt stehen, und die zwei Verbindungsabschnitte (212) der zwei Mittelabschnitte (21) der zwei Bauteile der Wärmeisolierung (20) jeweils um einen Abstand (G) von den zwei Seitenflächen (111) des Kamerahauptkörpers (10) beabstandet sind.

2. Fahrzeugkamera (1) nach Anspruch 1, wobei Höhen (H2) der zwei Bauteile der Wärmeisolierung (20) in einem Bereich von 90 % bis 110 % einer Höhe (H1) des Kamerahauptkörpers (10) liegen.

3. Fahrzeugkamera (1) nach Anspruch 1, wobei ein Gehäuse (11) des Kamerahauptkörpers (10) aus einem Metallmaterial besteht, und die zwei Bauteile der Wärmeisolierung (20) aus einem Kunststoffmaterial bestehen.

4. Fahrzeugkamera (1) nach Anspruch 1, wobei die zwei Bauteile der Wärmeisolierung (20) Platten sind.

5. Fahrzeugkamera (1) nach Anspruch 1, die ferner eine Halterung (40) umfasst, wobei die Halterung (40) am Kamerahauptkörper (10) angeordnet ist.

6. Fahrzeugkamera (1) nach Anspruch 1, wobei der Kamerahauptkörper ein Gehäuse (11), eine vordere Abdeckung (14), eine hintere Abdeckung (15), eine Elektronikbaugruppe (12) und eine Objektivbaugruppe (13) umfasst, die zwei Seitenflächen (111) am Gehäuse (11) angeordnet sind, die vordere Abdeckung (14) und die hintere Abdeckung (15) an zwei gegenüberliegenden Seiten des Gehäuses (11) befestigt sind, die zwei Bauteile der Wärmeisolierung (20) an der vorderen Abdeckung (14) und der hinteren Abdeckung (15) befestigt sind, die Elektronikbaugruppe (12) und die Objektivbaugruppe (13) sich im Gehäuse angeordnet sind, die vordere Abdeckung (14) eine Öffnung (141) aufweist, und die Objektivbaugruppe (13) durch die Öffnung (141) freiliegt.

## Revendications

1. Caméra pour véhicule (1) comprenant :
un corps principal de caméra (10) présentant deux surfaces latérales (111) détournées l'une de l'autre ; et
deux composants d'isolation thermique (20) disposés respectivement sur les deux surfaces latérales (111) du corps principal de caméra (10) détournées l'une de l'autre ;
les conductivités thermiques des deux composants d'isolation thermique (20) étant inférieures à la conductivité thermique du corps principal de caméra (10) ;
**caractérisée en ce que**
la caméra pour véhicule (1) comprend en outre une pluralité d'éléments de fixation (30), et
les deux composants d'isolation thermique (20) sont respectivement fixés sur les deux surfaces latérales (111) du corps principal de caméra (10) au moyen de la pluralité d'éléments de fixation (30) ;
sachant que
chacun des deux composants d'isolation thermique (20) comprend une partie centrale (21) et deux parties de montage (22) respectivement reliées aux deux côtés opposés de la partie centrale, et
les quatre parties de montage (22) des deux composants d'isolation thermique (20) sont fixées sur les deux surfaces latérales (111) du corps principal de caméra (10) au moyen de la pluralité d'éléments de fixation (30), et les deux parties centrales (21) des deux composants d'isolation thermique (20) sont respectivement en contact avec les deux surfaces latérales (111) du corps principal de caméra (10) ;
la partie centrale (21) de chacun des deux composants d'isolation thermique (20) comprend deux éléments de contact (211) et un élément de liaison (212) situé entre les deux éléments de contact (211) et relié à ceux-ci, et
les quatre éléments de contact (211) des deux parties centrales (21) des deux composants d'isolation thermique (20) sont en contact avec les deux surfaces latérales (111) du corps principal de caméra (10), et les deux éléments de liaison (212) des deux parties centrales (21) des deux composants d'isolation thermique (20) sont respectivement espacés des deux surfaces latérales (111) du corps principal de caméra (10) d'une distance (G).

2. Caméra pour véhicule (1) selon la revendication 1,
dans laquelle les hauteurs (H2) des deux composants d'isolation thermique (20) se situent dans une plage comprise entre 90 % et 110 % d'une hauteur (H1) du corps principal de caméra (10).

3. Caméra pour véhicule (1) selon la revendication 1,
dans laquelle un boîtier (11) du corps principal de caméra (10) est réalisé en un matériau métallique, et les deux composants d'isolation thermique (20) sont réalisés en un matériau plastique.

4. Caméra pour véhicule (1) selon la revendication 1,
dans laquelle les deux composants d'isolation thermique (20) sont des plaques.

5. Caméra pour véhicule (1) selon la revendication 1,
comprenant en outre un support (40), le support (40) étant disposé sur le corps principal de caméra (10).

6. Caméra pour véhicule (1) selon la revendication 1,
dans laquelle le corps principal de caméra comprend un boîtier (11), un capot avant (14), un capot arrière (15), un ensemble électronique (12) et un ensemble d'objectif (13), les deux surfaces latérales (111) sont situées sur le boîtier (11), le capot avant (14) et le capot arrière (15) sont fixés sur deux côtés opposés du boîtier (11), les deux composants d'isolation thermique (20) sont fixés sur le capot avant (14) et le capot arrière (15), l'ensemble électronique (12) et l'ensemble d'objectif (13) sont situés à l'intérieur du boîtier, le capot avant (14) présente une ouverture (141), et l'ensemble d'objectif (13) est à découvert à travers l'ouverture (141).
